# EUROPEAN PATENT SPECIFICATION

(11) **EP 2 245 971 B1**
(45) Date of publication and mention of the grant of the patent: **10.10.2012**
(21) Application number: 10005497.2
(22) Date of filing: 09.04.2008
(51) Int. Cl.: A47J 37/06

(54) **Improved barbecue and barbecue components**
Verbesserter Grill und Grillkomponenten
Barbecue amélioré et composants de barbecue

(30) Priority: 16.04.2007 AU 2007902003 P
(43) Date of publication of application: 03.11.2010
(62) Divisional of application: 08735108.6
(73) Proprietor: Aktiebolaget Electrolux, 105 45 Stockholm (SE)
(72) Inventor: Eriksson, Lars, 182 63 Djursholm (SE); Williamson, Craig, 2046 Rodd Point New South Wales (AU); White, Greg, 5008 Dudley Park South Australia (AU); Thompson, Lyall, 5008 Dudley Park South Australia (AU); Wild, Greg, 5037 North Plympton South Australia (AU); Stevens, Craig, 5024 Fulham Gardens South Australia (AU); Craig, Lyndon, 2010 Surry Hills New South Wales (AU); King, Scott, 2020 Mascot New South Wales (AU)
(74) Representative: Samzelius, Roger Mikael

(56) References cited:
- EP-A1- 0 908 129
- US-A- 3 369 481
- US-A- 4 598 634
- US-A- 4 608 917
- US-B1- 6 260 478
- US-B1- 6 415 710

## Description

### Field of the invention

The present invention relates to barbecues and in particular to flame viewing systems, grilles, lids, hotplates or griddles, and grease collector systems for such barbecues.

### Background of the invention

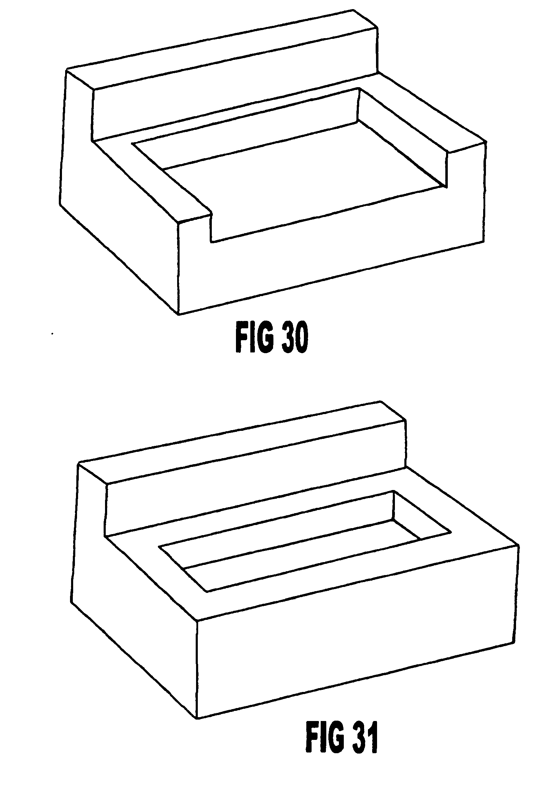

Outdoor gas barbecues are in the main arranged on trolleys. When installed in a bench such installation generally requires that the barbecue be installed in a U-shaped cut-out in a bench top, through the top and front of the bench (see figure 30 of the accompanying figures), so that the controls and grease tray, generally located underneath the combustion chamber of the barbecue, can be accessed from the lower front of the barbecue.

However, with increasing market acceptance of outside kitchen areas, prior art barbecues, such as those installed in benches as in figure 30 are inappropriate for use in a rectangular cut-out in a middle portion of the bench whereby the bench completely surrounds the barbecue, as in figure 31 of the accompanying drawings.

US4598634A discloses a portable broiler and griddle apparatus which is placed on top of the burners on a cooking range to convert the range interchangeably into a broiler for flame broiling or a griddle for frying. The apparatus comprises a three-sided fire box within which rests interchangeably a broiling grid or a griddle on which the food is cooked. The griddle, grid, and base are positioned at an angle to drain off grease into a removably attached grease cup at the front of the fire box.

Any reference herein to known prior art does not, unless the contrary indication appears, constitute an admission that such prior art is commonly known by those skilled in the art to which the invention relates, at the priority date of this application.

### Summary of the invention

The present invention a cooking appliance according to claim 1.

The collector is removable from said cabinet whist said hot plate or grille remains in said appliance.

The collector can include one elongated side which is releasably securable to said cabinet.

The collector can be removable from said cabinet in a step wise motion.

The step wise motion can be comprised of first a vertical motion then horizontal motion then vertical motion.

The collector includes two spaced handle means to facilitate removal of said collector from said cabinet.

The handle means can be an aperture through a side wall of said collector.

The aperture can include a grommet or bead around its periphery.

The handle means can enable said collector to have its angular of orientation controlled as said collector is removed from said cabinet.

The cabinet can include a heat shield between the heat source for said appliance and said collector.

The hot plate or grille can extend over and past said heat shield to terminate above said collector.

The heat shield can include a double wall arrangement having an air gap between.

The heat shield can include at least said one viewing aperture to enable an operator to view through or past said collector and said apertures to determine if a heat source is activated.

The at least one aperture includes a mica viewing panel.

In the above paragraphs and in the following description and claims the word "HOTPLATE" refers to a structure having a cooking surface which is not vented and which is a predominantly closed, such as a griddle type structure having a flat or corrugated metal surface, which is heated from underneath for the purpose of cooking on the upper side thereof. This meaning is imported notwithstanding that in different jurisdictions the word HOTPLATE may have other meanings, some of which may be more limited, than used herein, or notwithstanding that other more apt words might be used as a substitute.

Similarly with respect to the word GRILLE, which refers to a vented cooking structure or surface, such as a gridiron type structure made up of bars, rods or channels through which heat can pass.

### Brief description of the drawings

The present invention will now be described, by way of example only, with reference to the accompanying drawings, in which:

Figure 1 illustrates a perspective view of an assembled in-bench barbecue;

Figure 2 illustrates an exploded perspective view of the barbecue of figure 1;

Figure 3 illustrates a section view in direction of arrows III-III of figure 1;

Figure 3A illustrates a part sectional view with some components removed;

Figure 4 illustrates a section view in direction IV-IV of figure 1;

Figure 5 illustrates a part detail of the grease management system and viewing system;

Figure 6 is a perspective view of a grease collector used in figure 5;

Figure 7 is a rear view of the grease collector of figure 6;

Figure 8 is a side view of the grease collector of figure 6;

Figure 9 is a forward perspective view of an assembled grille;

Figure 10 is a rear view of the grille of figure 9;

Figure 11 is a front view of the grille of figure 9;

Figure 12 is a perspective view of the lower portion of the grille of figure 9;

Figure 13 is a perspective view of the upper portion of the grille of figure 9;

Figure 14 is a side view of the grille of figure 9;

Figure 15 is a perspective view of a hotplate or griddle;

Figure 16 is an underneath view of the hotplate of figure 15;

Figure 17 is a front view of the hotplate of figure 15;

Figure 18 is a section view through in direction of arrows XVIII-XVIII of figure 15;

Figure 19 is a section view through in direction of arrows XIX-XIX of figure 15;

Figure 20 illustrates a perspective view of a barbecue lid;

Figure 21 illustrates an exploded perspective view of the lid of figure 20;

Figure 22 illustrates a plan view of the lid of figure 20;

Figure 23 illustrates a front view of the lid of figure 20;

Figure 24 illustrates a side view of the lid of figure 20;

Figure 25 illustrates a front corner detail of the lid of figure 20;

Figure 26 illustrates a perspective view of an alternate lid to that of figures 20 to 25;

Figure 27 illustrates an exploded perspective view of the lid of figure 26;

Figure 28 illustrates the shape of the single metal panel blank from which the lid component is made;

Figure 29 illustrates the blank of figure 29 with some of the sides folded;

Figure 30 illustrates a diagram of the U-shaped cut-out bench type;

Figure 31 illustrates a diagram of a bench with hole though which the drop-in barbecue described herein can be mounted;

Figure 32 illustrates a perspective cut away view of the left side of the barbecue with a grille assembly mounted therein to show how the grille assembly is supported by the heat shield and rear step;

Figure 33 illustrates a perspective cut away view of the left side of the barbecue with a hotplate mounted therein to show how the hotplate is supported by the heat shield and rear step;

Figure 34 illustrates a perspective view another lid for use with the barbecue of the present invention;

Figure 35 illustrates a part detail perspective of a cool handle of the lid of figure 34; and

Figure 36 illustrates a cross sectional detail of how the handle of figure 35 attaches to the lid of figure 34.

### Detailed description of the embodiment or embodiments

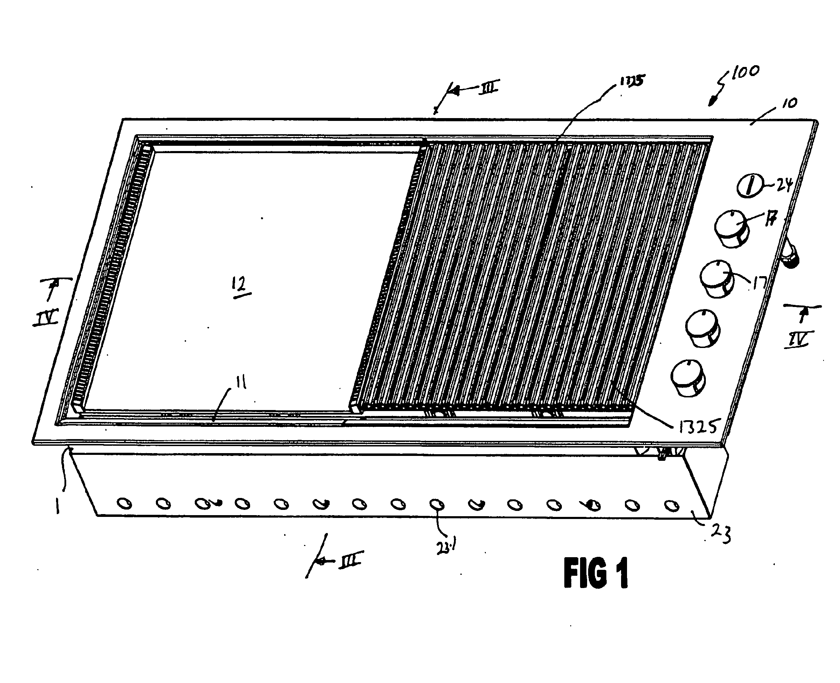

Illustrated in figure 1 is a perspective view of an in-bench barbecue 100 having a cabinet 1, a front cover plate 23 with holes 23.1 therein, a hot plate 12, grille assembly 1325, a frame surround 12 and control knobs 17. Each of these components and the construction of the barbecue 100 will be described in more detail below.

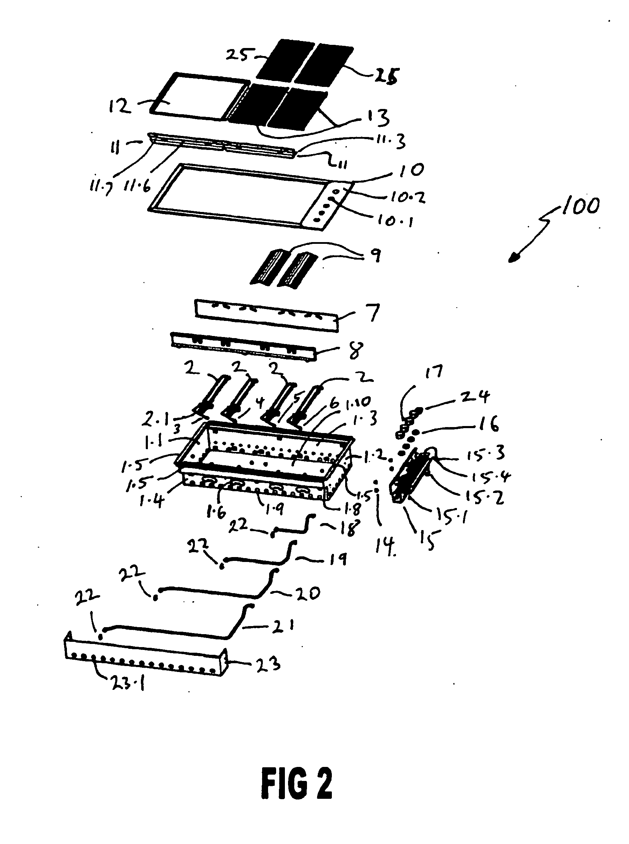

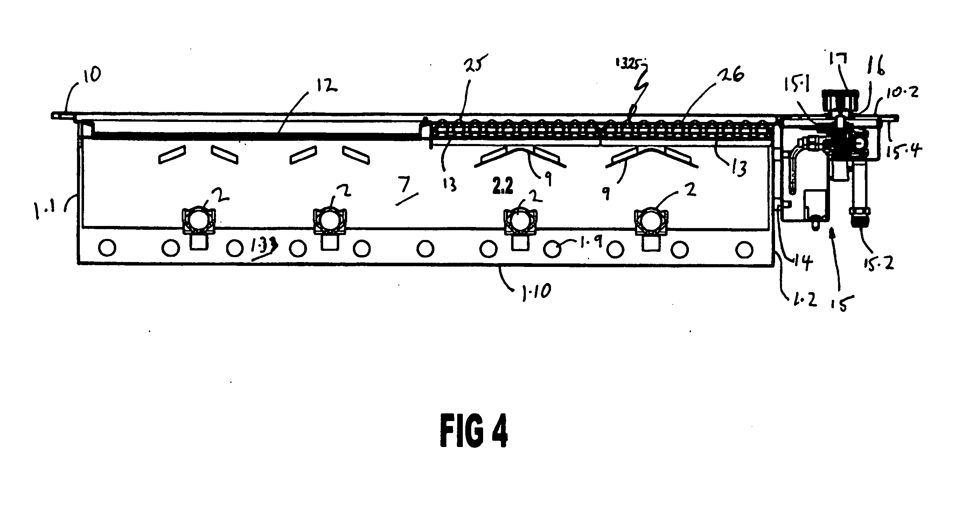

Illustrated in figures 2, 3, 3A and 4 is the barbecue 100 in an exploded perspective view, and two cross sections respectively. The barbecue 100 comprises a generally rectangular cabinet 1 having a base 1.10 and a left side 1.1, a right side 1.2, a stepped rear side 1.3 having a step 1.31 and a stepped front side 1.4. At the upper peripheral edge of each of the sides is a flange 1.5 which will prevent the cabinet 1 from sinking into a hole or aperture through a bench top. The cabinet 1 can be secured into a bench top by screws passing through the sides 1.1 and 1.2 into the side edge of the aperture, through the bench top, or alternatively clamping or securing mechanisms as used for in-bench cooking hobs or sinks can be used.

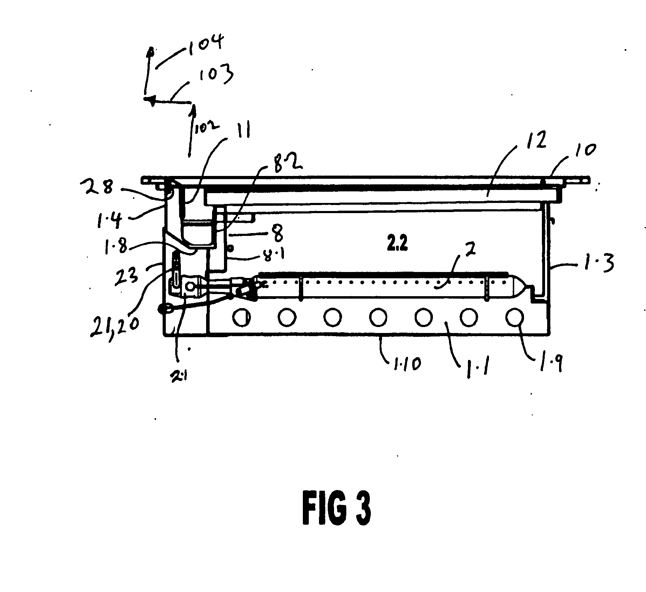

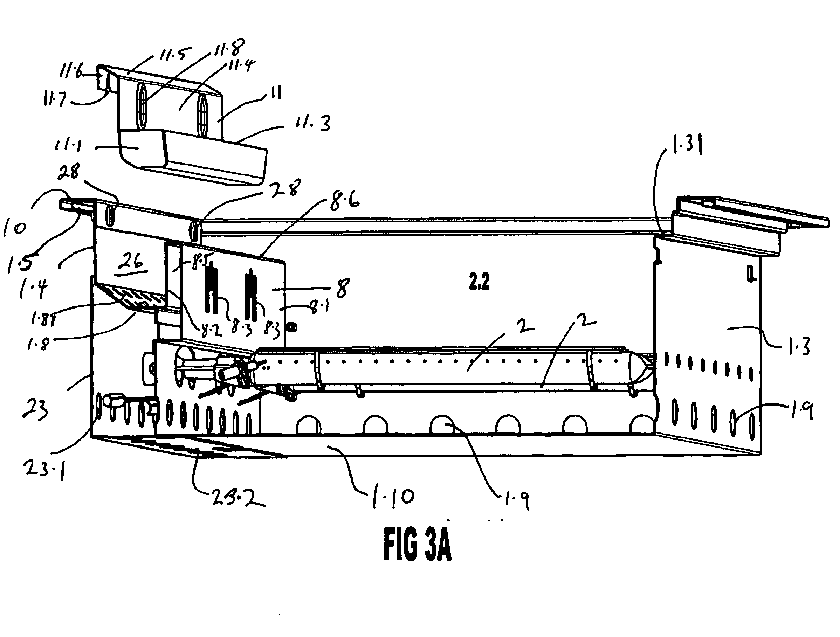

Through apertures 1.6 in the front side 1.4 can pass the injection nozzles 2.1 of the burners 2 as best seen in the cross section of figures 3 and 3A. The injection nozzles 2.1 receive the terminus of respective gas conduits 18, 19, 20 and 21 which can be secured to the cabinet 1 by means of spring clips 22, so that gas passing through the conduits 18, 19, 20, 21 can be injected via the nozzles 2.1 into the gas burners 2 for ignition during use.

The conduits 18, 19, 20, 21 are protected by a cover plate 23 which is attached to the cabinet 1 so as to sit below the step 1.8 in the front side wall 1.4. The right hand side of each of the conduits 18, 19, 20, 21 is connected to gas control rail 15 which has a series of gas control valves 15.1 located therein. The gas control rail 15 is attached to the side 1.2 by means of screws (not illustrated) and spacers 1.4 which help to keep the gas control rail 15 at a required temperature of operation when the burners 2 are functioning. The underside of the gas control rail 15 includes a male connector 15.2 for connection to standard gas fitting to supply gas under pressure to the barbecue 100. The gas control rail 15 also includes an outer edge 15.4 which will engage the right hand side rim of the aperture through the bench in which the barbecue 100 is located.

Also included in the gas control rail 15 is a battery storage 15.3 so as to supply electricity for the igniters when a gas control valve stem is pushed in a downward direction by an operator, via control knobs 17. Each burner 2 has associated with it a thermo couple and igniter 3, 4, 5 and 6 respectively. As the igniters obtain power from the batteries, the igniter continues to spark for as long as the operator is pushing down on the control knob 17 and for as long as there is charge stored in the batteries. Should the batteries require replacement a battery cover cap 24 is removed from the battery storage housing and the batteries replaced and the cover 24 replaced. It will be noted that the battery cover cap 24 is accessible from the top surface of the barbecue 100.

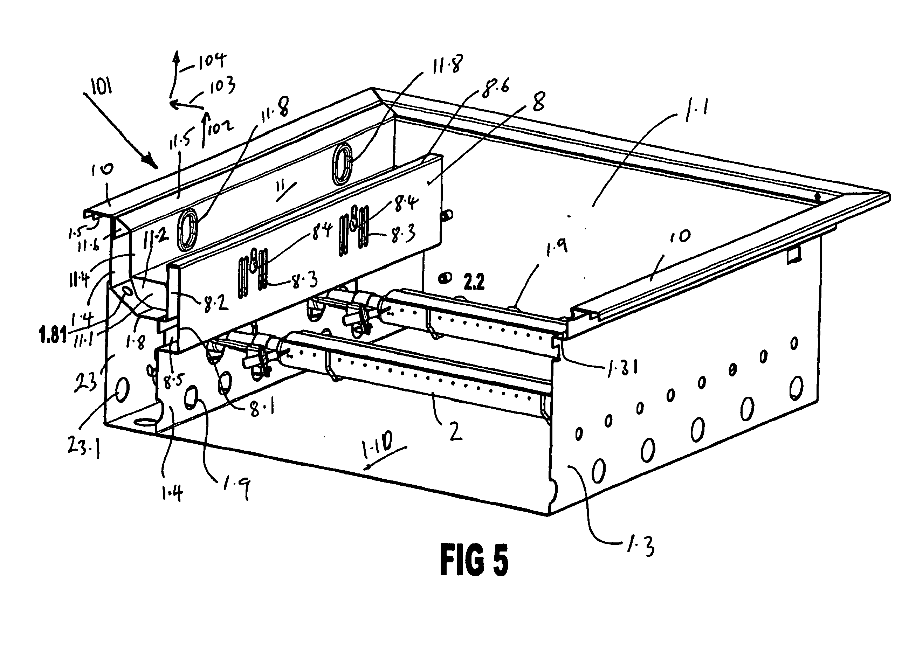

As illustrated in figure 3A and Figure 5 it can be seen that the step 1.8 in front wall 1.4 has a series of apertures 1.81 which underlie the grease collector 11, when the grease collector is assembled in the cabinet 1. The apertures 1.81 receive unheated air from apertures 23.1 and 23.2 in the cover plate 23, and allows this unheated air to pass around the grease collector 11, to thus keep the trough 26 and the grease collector 11 located therein, relatively cool, by comparison to the heat generated from the 2.2 chamber side of the heat shield 8.

A rear heat shield 7 is located inside the cabinet I adjacent the rear wall 1.3 which serves to mount heat distributors 9 located above the two burners 2 which are located below the grille assemblies 1325 when assembled. The heat distributors 9 (commonly called vaporisers) serve to distribute the heat more evenly and can thus help to stop flare ups by concentration of heat passing from the combustion chamber 2.2 through the grille assemblies 1325.

The rear heat shield 7 also serves to keep the outer wall 1.3 cool by absorbing radiant and convective heat from the burners and leaving an air gap to the external wall 1.3.

As illustrated in figures 2, 3 and 5 a forward heat shield 8 has a internal wall 8.1 and an external generally vertical wall 8.2 and an air gap 8.5 therebetween. The top edge 8.6 of the heat shield 8 provides a forward support to bear the load provided by the hot plate 12 and the grille assemblies 1325 (as seen in figure 3) which load is transmitted thereto by the forward ends of the hot plate 12 and grille assemblies 1325.

The box construction of the heat shield 8 ensures that the outer surface 8.2 is maintained at a reasonably cooled temperature by comparison to the inner surface 8.1. This helps to keep the trough 26, formed by the step 1.8 in the forward wall 1.4, relatively cool as this trough 26 will receive the grease collectors 11 when assembled, as will be described below.

The heat shield 8 includes a series of slots or apertures 8.3 through the rear wall 8.1 corresponding to the respective locations of the burners 2. Likewise there are a series of apertures 8.4 through the forward wall 8.2. The apertures 8.3 and 8.4 are in register together and the trough 26 formed by the step 1.8 and the trough shaped nature of the generally Z-shaped grease collectors 11, ensures that a person looking in the direction of arrow 101 in figure 5 (which is rearwardly and downwardly relative to the barbecue 100) will see through the trough 26 and the apertures 8.4 and 8.3, to view the respective burners 2 to determine whether or not a flame exists thereon. The apertures 8.4 and 8.3 provide a means to manually light or ignite them by means of a long match stick or a lighter having an elongated neck. This arrangement ensures that a means to view the gas burners 2 and to manually light or ignite them, is provided even though the barbecue 100 is placed inside a hole or aperture through a bench as in figure 31, which in turn means that the forward faces of the barbecue 100 are below and hidden by the bench top.

To complete the assembly of the cabinet 1 a frame surround 10, a portion of which is visible in figure 2, is secured to the flange 1.5 around the cabinet and the flange 15.4 on the gas control rail 15.

The frame surround 10 has five apertures 10.1 through the right hand panel 10.2 which overlays the gas control rail 15. Through the holes 10.1 the valve stems of the valves 15.1 protrude. The apertures 10.1 and the valve stems are sealed with respect to the top surface 10.2 by four grommets 16.

The fifth hole 10.1 in the plate 10.2 allows the battery cover cap 24 to pass through and seal against.

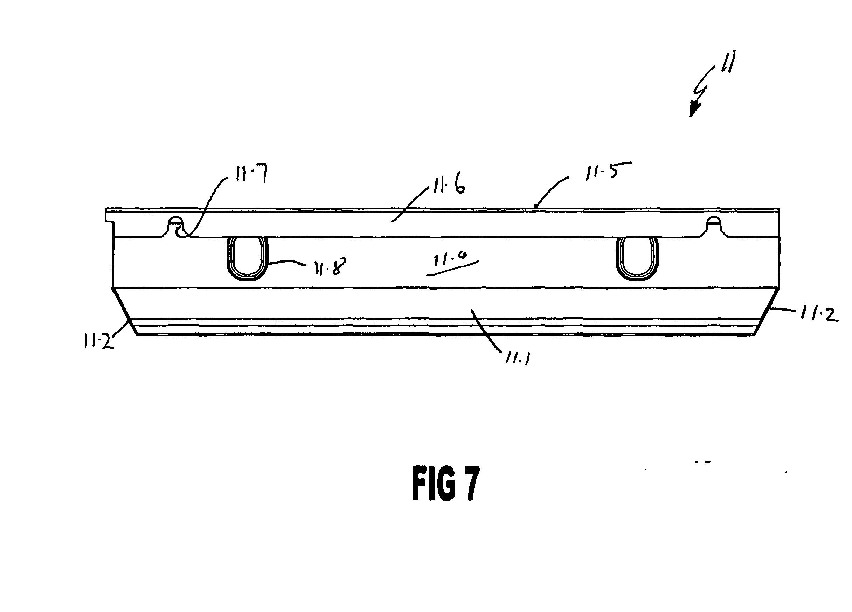

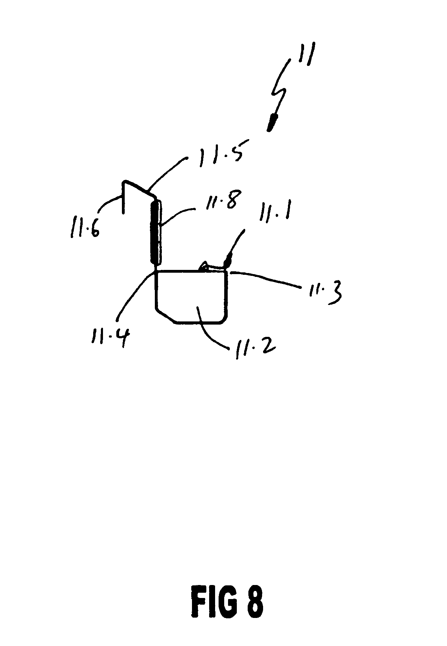

As is illustrated in figures 1, 2, 3, 3A, 5, 6, 7 and 8, the grease collectors 11 (of which only one is illustrated in figures 3A and 5) are of a generally Z-shape configuration with a lower trough 11.1 which has left and right sides 11.2 and a rear edge 11.3 which when assembled is positioned below the lower most edges of the apertures 8.3 and 8.4 in the heat shield 8. The forward wall 11.4 of the trough 11 is considerably higher than the rear edge 11.3 and terminates in a forwardly directed flange 11.5 which in its turn has extending therefrom a downwardly extending flange 11.6 which is best viewed in figure 8. It can be seen from figures 5 and 7 that the downwardly extending flange 11.6 has cut outs 11.7 which allow the grease collectors 11 to hang off screws or rivets 28 which are located in the upper region of the wall 1.4.

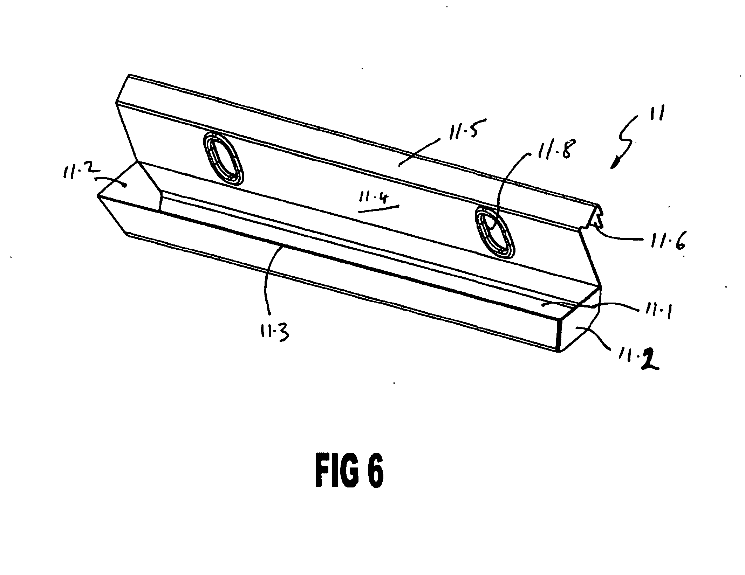

As can be seen from figures 6, 7 and 8 the forward wall 11.4 includes two apertures 11.8 therein. The edges of the apertures 11.8 are protected or covered by a rubber or silicone grommet. Alternatively, the edges of the apertures 1.8 can be beaded or otherwise rounded or blunted, so that users can position their fingers through the apertures 11.8 so as to lift the flange 11.6 off the screws or rivets 28. Providing two apertures 11.8 ensures that the operator can keep the grease collector 11 generally horizontal so as to ensure that any grease or liquid contained within the collector 11 will not spill on the way to disposal.

As can be seen from figures 3 and 5, the forward edges of the hot plate 12 and grille assemblies 1325 sit over the trough 11.1, and thus a direct or single vertical movement of the grease collectors 11 will not allow the grease collectors to be removed from the cabinet 1. Instead, what is required is movement first in the vertical direction of arrow 102 until the trough 11.1 is close to or engages the under surface of the hot plate 12 or grille assembly 1325, by which time cut-outs 11.7 have cleared screw or rivets 28. Then generally horizontal movement is required in the direction of arrow 103 which is towards the forward end of the barbecue 100 thus allowing the trough 11.1 to clear the underside lip of the hotplate 12 or grille assemblies 1325 until the forward wall 11.4 of the trough engages or is close to the upper forward wall of the side 1.4. At this point a final vertical movement in the direction of arrow 104 can be resumed to completely remove the grease collectors I 1 from the cabinet I, without removing the hotplate 12 or grille assemblies 1325.

The installation of the grease collectors 11 is the reversal of the arrows 104, 103, 102 with the rear flange 11.6 being hooked by means of the recesses 11.7 onto the screws or rivets 28.

The hotplate 12, which will be described in more detail below, is preferably located on the left hand side of the barbecue 100, away from the gas control rail 15. The grille assemblies 1325, each preferably constructed from an upper and lower piece, as will be described in more detail later, is preferably located on the side of the cabinet 1, nearest to the gas control rail 15. The arrangement ensures that combustion products produced in the combustion chamber 2.2, which can escape quicker through the grille assemblies 1325 than from under the hotplate 12, will have a lesser effect on the gas control rail, than if the opposite arrangement were utilised. Thus the grille assembly 1325 side of the cabinet 1 tends to be cooler than the hotplate 12 side and thus the grille assembly 1325 side is the better location for the control rail 15. This effect can also be achieved if one grille assembly 1325 is located on either side of a hotplate 12.

An advantage of the construction of the cabinet 1 of the barbecue 100 is that the barbecue 100 is able to be a drop in bench unit and installed through a hole in a bench rather than through a U-shape cut out as illustrated in figure 30, as has been the case in barbecues to date. This is further assisted by the improved viewing arrangement and grease collection system by being located at the forward end of the barbecue 100. This provides a trough through which the burners 2 can be visible via apertures 8.3 and 8.4 through the heat shield 8. Further as the grease management system is located at the forward end of the barbecue, access for cleaning and use is convenient while the provision of the heat shield 8 ensures that heat and flame will not ignite the contents thereof.

It will be seen from figures 1, 2, 3, 3A, 4 and 5 that near the lower edges of the sides 1.1, 1.2, 1.3, 1.4 of the cabinet are located a series of holes 1.9, just above the base 1.10. These holes 1.9 allow air for cooling and combustion to pass into the cabinet 1, from the under bench regions of the bench top, when the barbecue 100 is installed.

As the cabinet has a closed base 1.10 the space underneath the cabinet I when mounted in a bench, can be used for storage. If desired the plate 1.10 can have a spaced heat shield so that the under surface remains cool whilst the heat shield absorbs the heat generated from the radiant component of the flame present on the burners 2 during use.

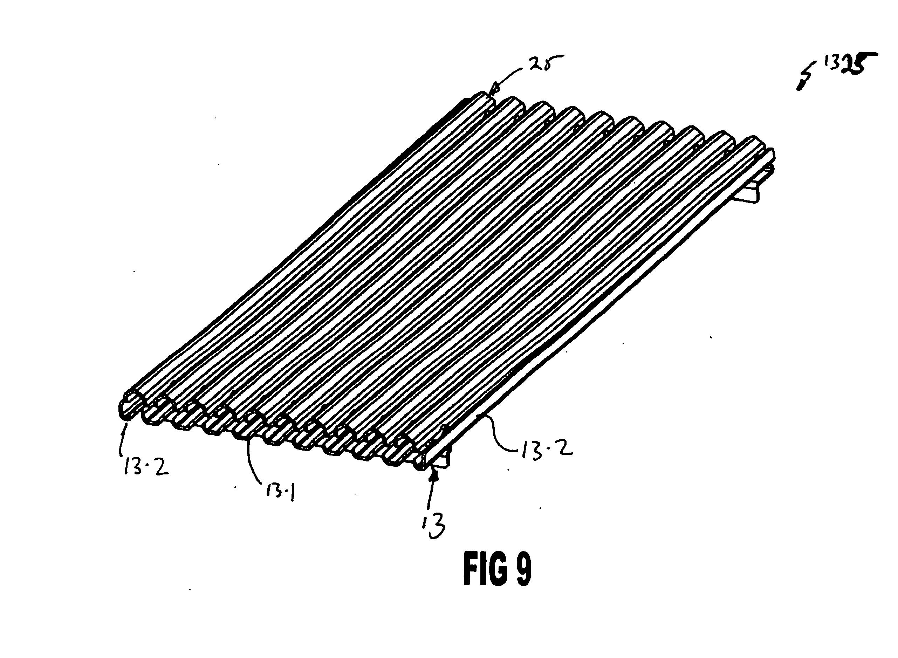

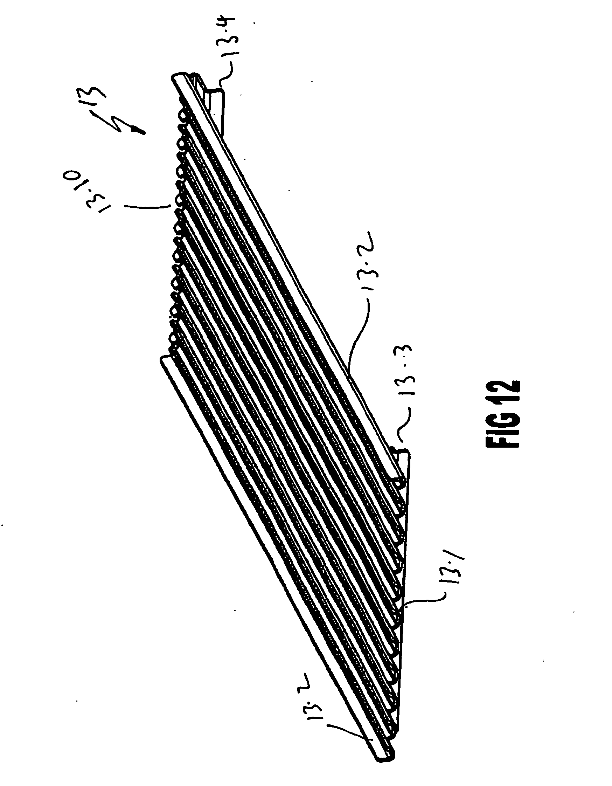

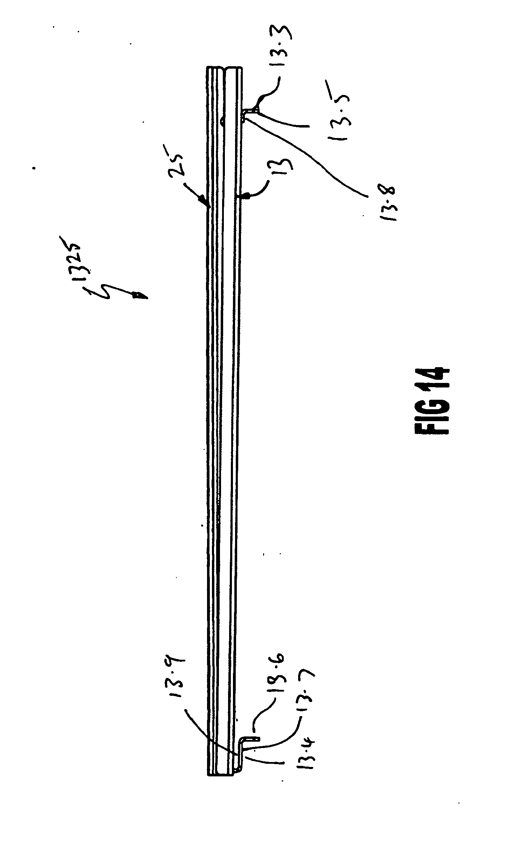

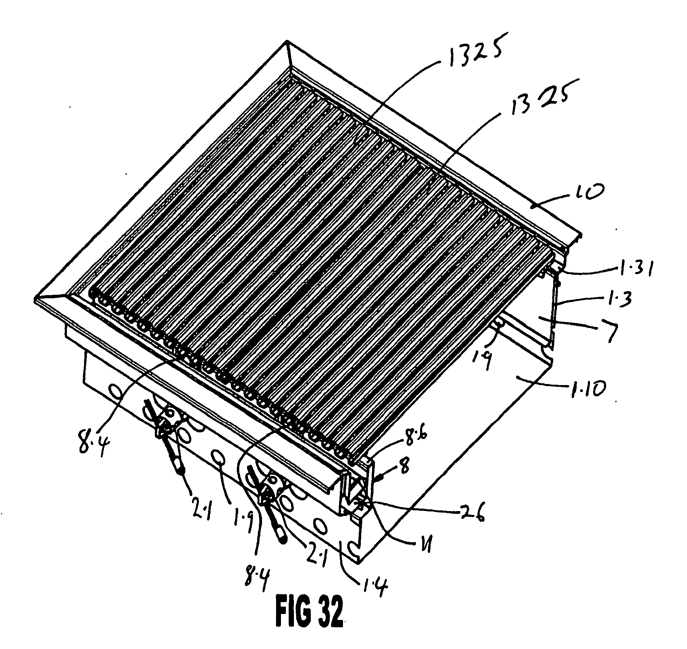

Illustrated in figures 9, 10, 11, 12, 13 and 14 are a grille assembly 1325, and the lower grid 13 and upper grid 25 thereof. From these figures it can be seen that the lower grid 13 has concave upwardly opening channel members 13.1, with half channel members 13.2 on the side peripheries of the lower grid 13. The channels 13.1 and 13.2 are held in generally parallel relationship to each other by laterally extending forward support 13.3 and laterally extending rearward support 13.4. The support 13.3 is generally L-shaped in cross section, while support 13.4 is generally Z-shaped in cross section, as best seen from figure 14. The downwardly extending legs 13.5 and 13.6 on the supports and the horizontal portions 13.7 and 13.8 allow the supports to cooperate with the tops and sides of the heat shields 8 and the rear step 1.31 as illustrated in figure 32, to support the assembly 1325 and also to prevent the assembly 1325 from moving in a forward and or rearward direction when assembled in the barbecue 100.

The gap 13.9 between the horizontal portion 13.7 and the base of the channels 13.1, 13.2 ensures that the channels 13.1 and 13.2, when installed on the heat shield 8 and the step 1.31, will slope downwardly from the back to the front of the barbecue 100. This downward slope ensures that liquids such as hot grease, oil or fat will, once its arrives in one of the channels 13.1 and 13.2 will continue to the grease collectors 11 for removal.

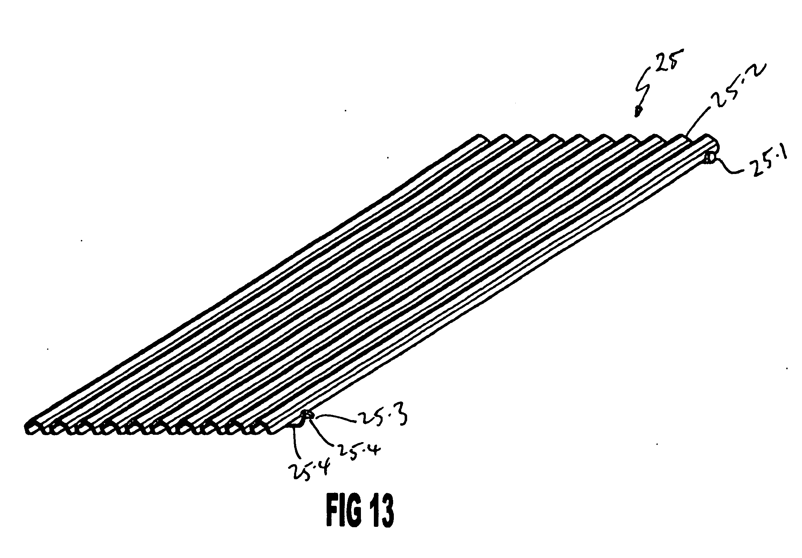

The lower grid 13, has at its higher end a series of cut-outs 13.10 across the sides of each channel 13.1. The cut-outs 13.10 are shaped so as to allow the lower half of a cylindrical rod to sit therein. Such a cylindrical rod 25.1 is used to support and separate the convex upwardly directed channels 25.2 of the upper grid 25, as illustrated in figure 13. The interaction between the rod 25.1 and the cut-outs 13.10 ensures that the upper grid 25 does not deleteriously move in a forward or rearward direction when assembled into the barbecue 100 and when in use.

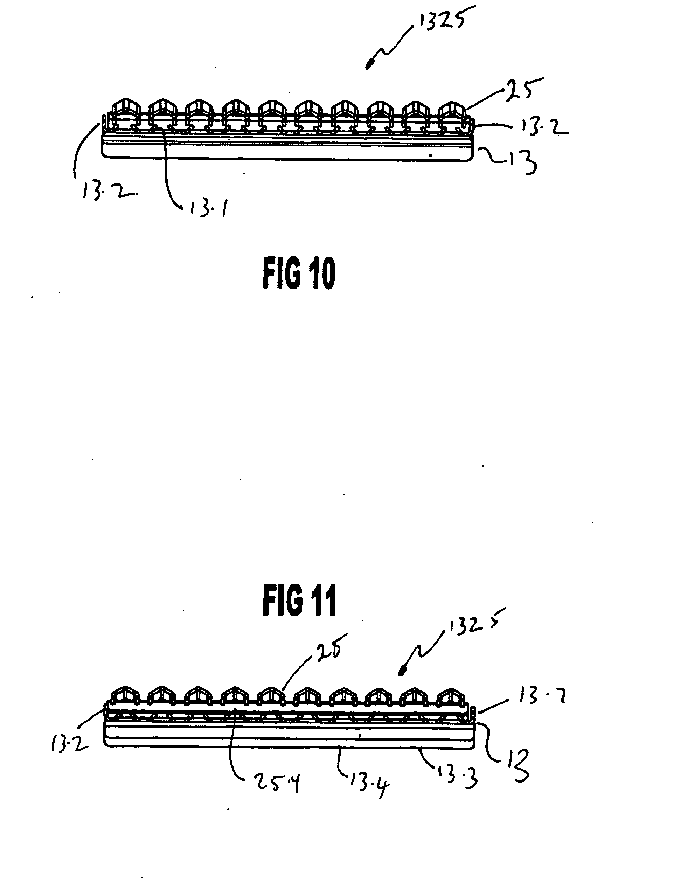

As illustrated in figure 13, the convex upwardly directed channels 25.2 have a longitudinally extending apex, which helps to sear lines in meat being cooked thereon. Further, it will be seen from figures 10 and 11 that the channels 25.2 have downwardly directed sides, of which the outer edges of these sides lie over the channel members 13.1 and 13.2 of the lower grid 13.

As is illustrated in figure 13, it can be seen that the forward ends of the channels 25.2 are kept separate and are supported by an upside down V-shaped support 25.3. When assembled to the lower grid 13, the edges 25.4 of the V-Shaped support 25.3 will sit on top of the side edges of the channels 13.1.

The half channels 13.2 will serve to constrain the lateral movement of the V-shaped support 25.3 and the rod 25.1 when the upper grid 25 is assembled on the lower grid 13.

The depth of the cut-outs 13.10, the thickness of the cylindrical rod 25.1, the depth of the upside down V-shaped support 25.3, and the height of the upper edges of the channels 13.1 in the vicinity of where the V-shaped support 25.3 will make contact, together with the angle of inclination which is produced by the legs and spacings on the lower side of the lower grid 13, and the height difference between the top edge 8.6 of the heat shield 8 and the step 1.31 on the rear wall 1.3 which are used to support the grille assemblies 1325 and the hotplate 12, are selected so as to ensure that the apexes of the channels 25.2, and the planar cooking surface of the hotplate 12 lay at a small angle (of the order of 1 to 2 degrees) to the horizontal plane, so that food or cooking equipment being heated over the grille 1325 will be generally horizontally supported (within 1 or 2 degrees), and in the case of the hotplate 12 any fat, juices, grease which may emanate from articles cooking thereon will move into the respective grease collector 11.

By achieving the desired angles of inclination of the lower grid 13, by means of the supports and features of the lower grid 13 and upper grid 25, and the cooperation of the heights of the step 1.31 on wall 1.3 with the top edge 8.6 of the heat shield 8, the cooking surface of the hotplate 12 and the upper apexes of the channels 25.2 can have a consistent or common angle of inclination with respect to the upper frame 10, and yet is still able to provide a grease management system which ensures that the grease, oil and liquids which are produced from cooking will proceed to the grease collectors 11.

From the front and rear views of the grille assembly 1325 in figures 9, 10 and 11, it can be seen that the upper grid 25 is formed from convex upwardly (concave downwardly) directed channels 25.2. The spacing between the lower edges of the channels 25.2 and the upper edges of the channels 13.1 increases in the direction from the rear to the front of the grille assembly 1325. This can be seen by the difference in spacing illustrated in figure 10 which is the rear view to the spacing illustrated in figure 11 which is the front view.

It can also be seen from the front and rear views of figures 10 and 11, that the outer edges of channels 25.2 overlap with the inside edges of the channels 13.1 and 13.2. This helps to ensure that any fat, particles or liquid which moves down over the channels 25.2 will fall into the channels 13.1 and 13.2.

The grille assembly 1325 is constructed from upper and lower grids 13 and 25, and the barbecue 100 uses two grille assemblies 1325. This arrangement helps to make cleaning of the grille assemblies 1325 relatively easy in that each can be put into a dishwasher if needed.

The forward edges of the channels 13.1 of the grille assemblies 1325 protrude past the heat shield 8 and over the trough 11.1 ensuring any oil, liquid or fat dripping from respective troughs or channels 13.1 will fall straight into the trough 11.1.

The upper and lower grids 13 and 25 can be made fabricated from sheet metal or alternatively cast, depending upon user requirements and product specifications.

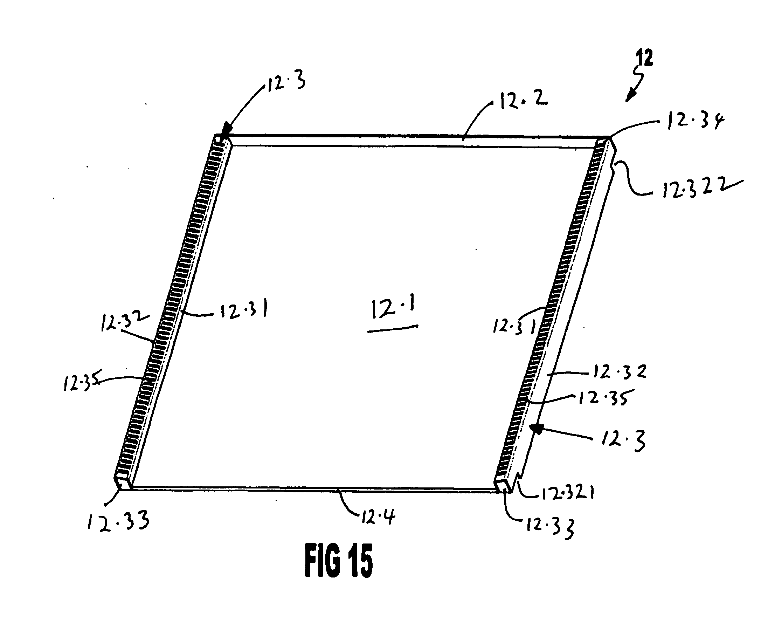

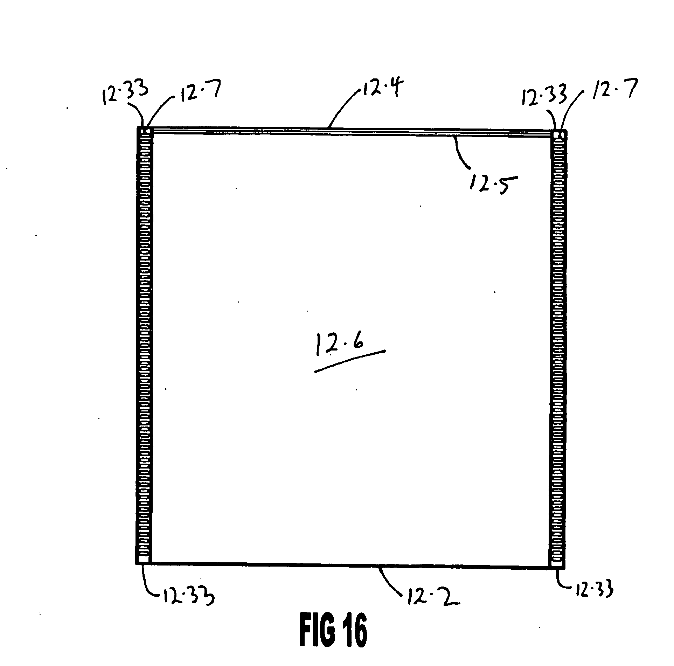

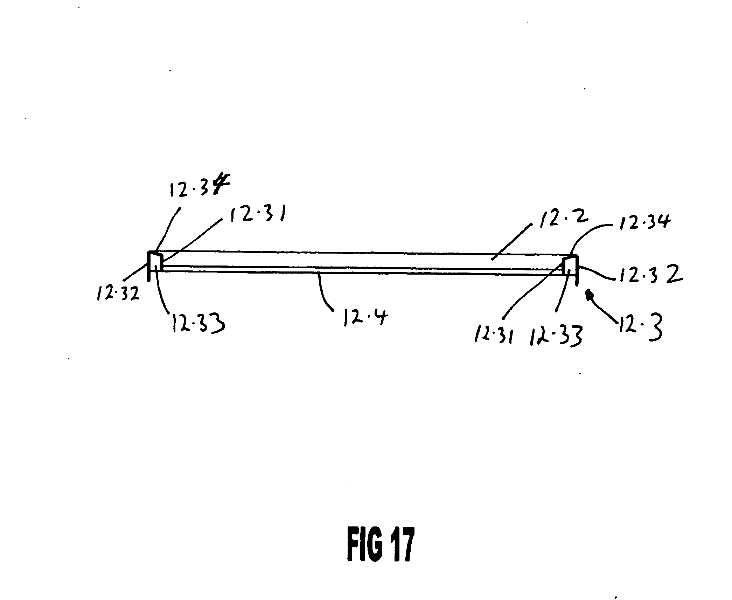

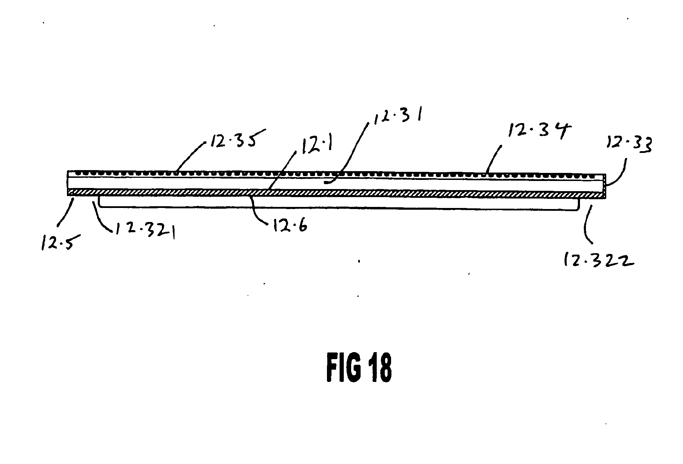

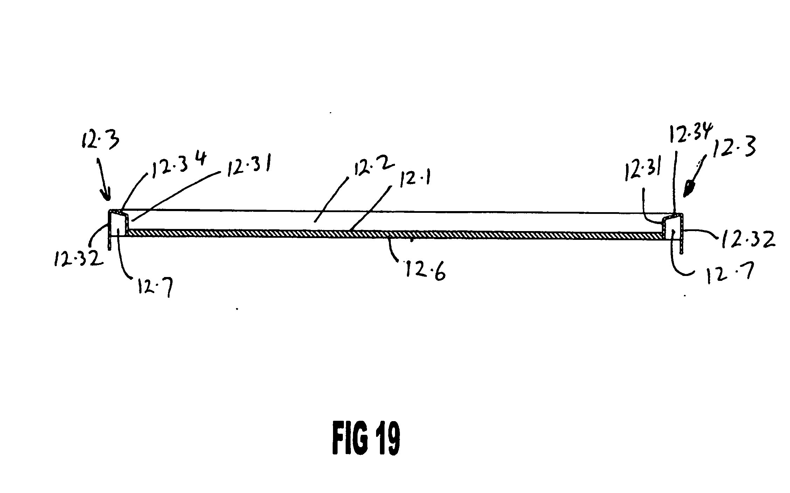

Illustrated in figures 15, 16, 17, 18 and 19 is the hotplate 12. From these figures it can be seen that the hot plate 12 has a generally planar cooking surface 12.1 a rear wall 12.2 with the sides formed from walls 12.3 which only extend along the left and right sides of the hotplate 12. The walls 12.3 are of a generally open box construction which as can be seen from the underneath view of figures 16 and the cross section of figure 19 are boxes which open in a downward direction towards the burners 2, when assembled in the barbecue 100.

The walls 12.3 have side walls 12.31 which are located along the side edges of the cooking surface 12.1 and outside walls 12.32, with the ends being formed by walls 12.33. The top surface 12.34 has an incline relative to the vertical walls 12.31 and 12.32, and in the embodiment illustrated in figures 15, 16, 17, 18 and 19, the walls 12.34 have therethrough a series of vents 12.35 to enable heat which gathers inside the open box construction of wall 12.3 to escape to atmosphere.

The construction and features of the walls 12.3 helps to prevent the hot plate 12 from overheating the cooking surface 12.1 as well as to ensure that any excess heat underneath 12.1 has a lesser impact on food cooking on the adjacent grille assembly 1325, adjacent to the right hand wall 12.3.

The front edge 12.4 of the cooking surface 12.1 extends over the trough 11.1 as illustrated in figures 1 and 3. The width of the walls 12.33 ensures that the length of the front edge is less than the width of the trough 11.1, which in turn ensures that all liquid which falls from the front edge 12.4 will fall into the trough 11.1.

To assist liquid and fat falling from the edge 12.4 there is provided in the side 12.6, which is above the combustion chamber 2.2, a groove 12.5 which extends the width of the hotplate 12, which is best illustrated in figures 16 and 19. By this means, any oil or grease which passes down the surface 12.1 over the edge 12.4 will break contact with the underside 12.6 (or side adjacent combustion chamber 2.2) and will ensure that the grease or oil will drip from the groove 12.5 into the trough 11.1 of the grease collectors 11. If desired, a protruding bead could be used to replace the groove 12.5 to achieve a similar effect.

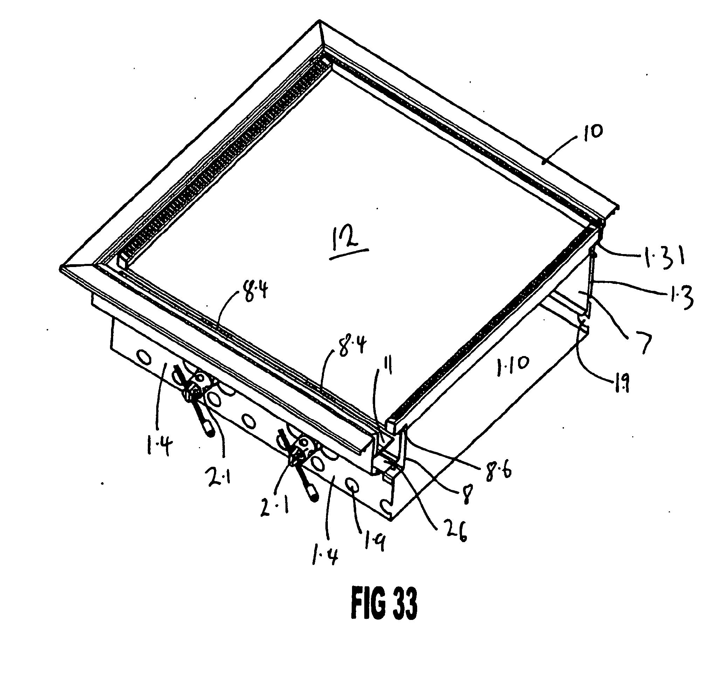

The side walls 12.32 include in the lower edge thereof, a forward cut-out 12.321 and a rearward cut-out 12.322, which serve to set the angle to the horizontal that the cooking surface 12.1 will sit at when assembled in the cabinet 1 on the step 1.31 and the top of the heat shield 8 as illustrated in figure 33. As mentioned above this will place the cooking surface 12.1 at an angle of 1 degree to 2 degrees to the horizontal.

The height of the side walls 12.3 above the level of the cooking surface 12. is of the order of 15mm to 20mm and serves to distance and protect the cooking surface 12.1 from any cross winds which come over the sides 12.3 and 12.2.

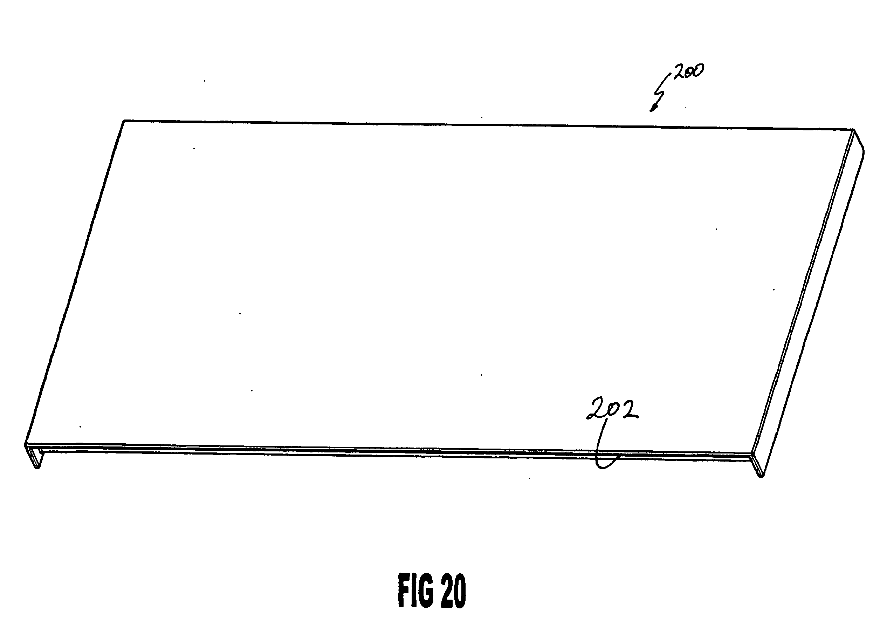

Illustrated in figures 20 to 25 is a lid 200 which can be used with the barbecue 100 described above.

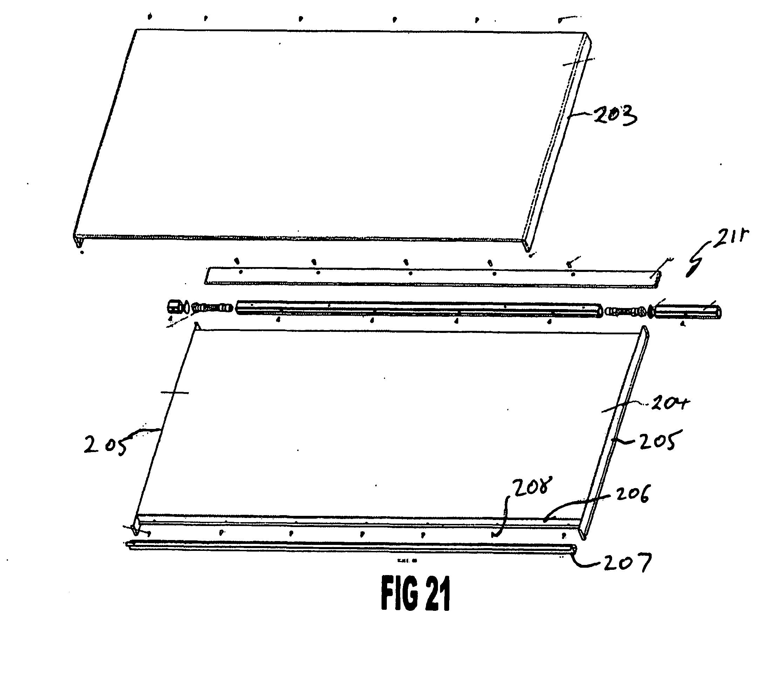

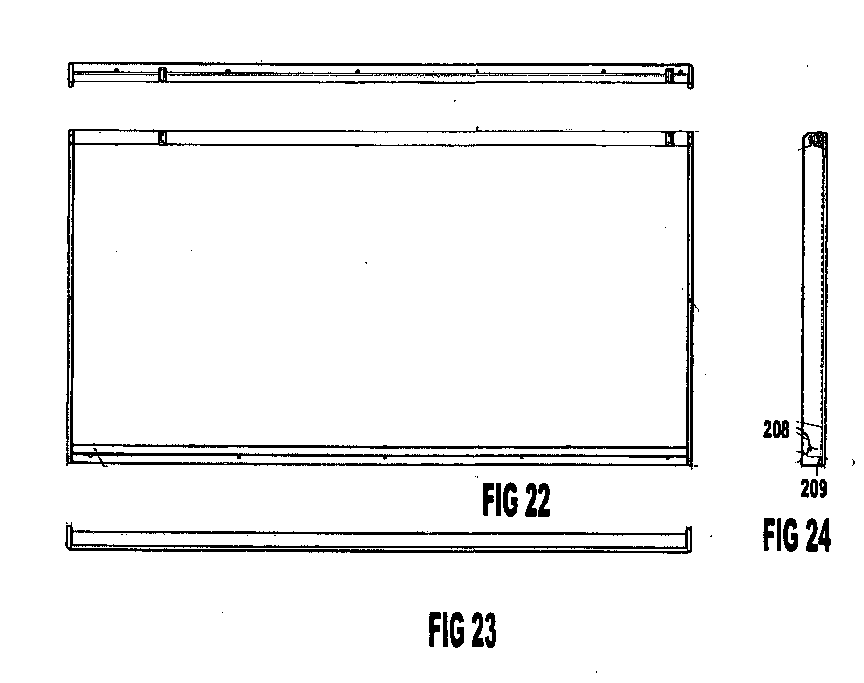

Illustrated in figure 20 the lid is 200 is of a generally planar construction with the forward edge having a built in recessed handle 202. As can be seen from figure 21 the lid 200 has an upper plate 203 which is generally U-shaped in cross section and a lower plate 204 of similar cross section, which has side walls 205 and a front wall 206. The front wall 206 has attached to it a forward most wall 207 of a generally z-shaped cross section which is secured to front wall 206 by means of screws 208 which can be seen in the cross section of figure 24. The forward most wall 207 helps to form a double wall with front wall 206 which extends downwardly from the surface 204 towards the bottom of the lid 200. A heat shield is produced by this double wall construction leaving the forward edge 209 to remain at a sufficiently lower temperature allowing the user or operator to use the forward edge to lift the lid to an open position or lower to a closed position.

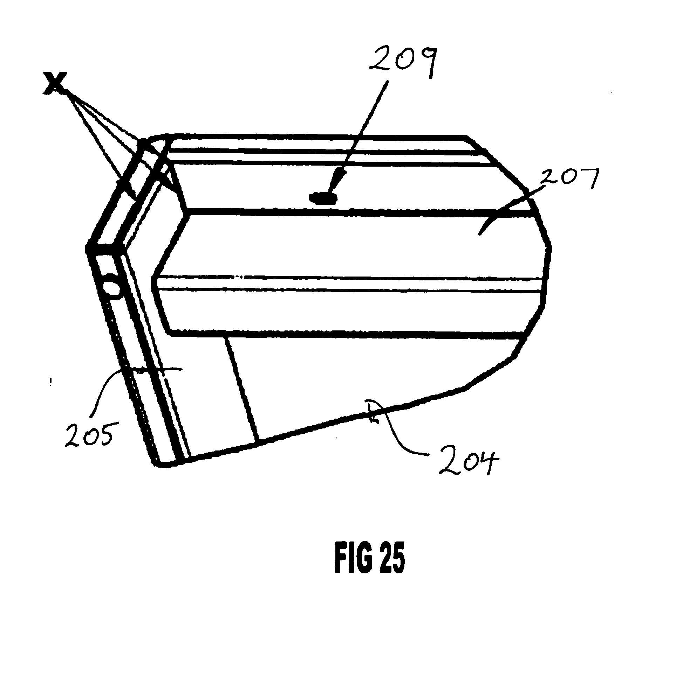

When constructing the lid 200 of figure 25, at the locations marked with an X, it is preferred to weld and dress the welds so as to produce a smooth and presentable surface and join.

At the rear of the lid 200, and constructed within the confines of a rear wall, is a spring loaded hinge system 211. The hinge system 211 can connect to brackets (not illustrated) which extend from the cabinet walls 1.1 and 1.2 and project upwardly above the upper surface of the barbecue 100 between the frame surround 10 and the perspective left edge of the hot plate 12 and the far right edge of the right hand grille assembly 1325.

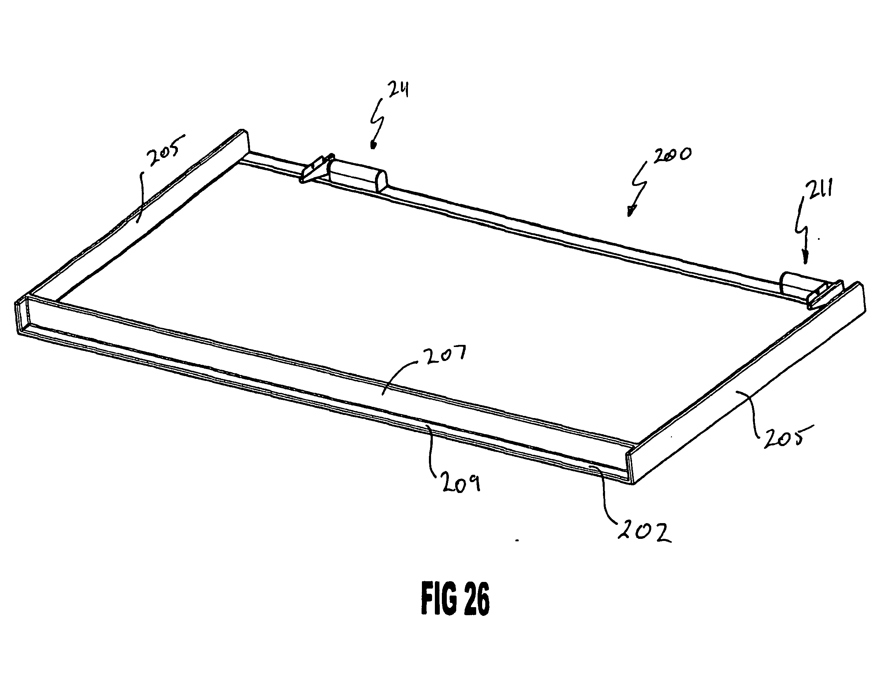

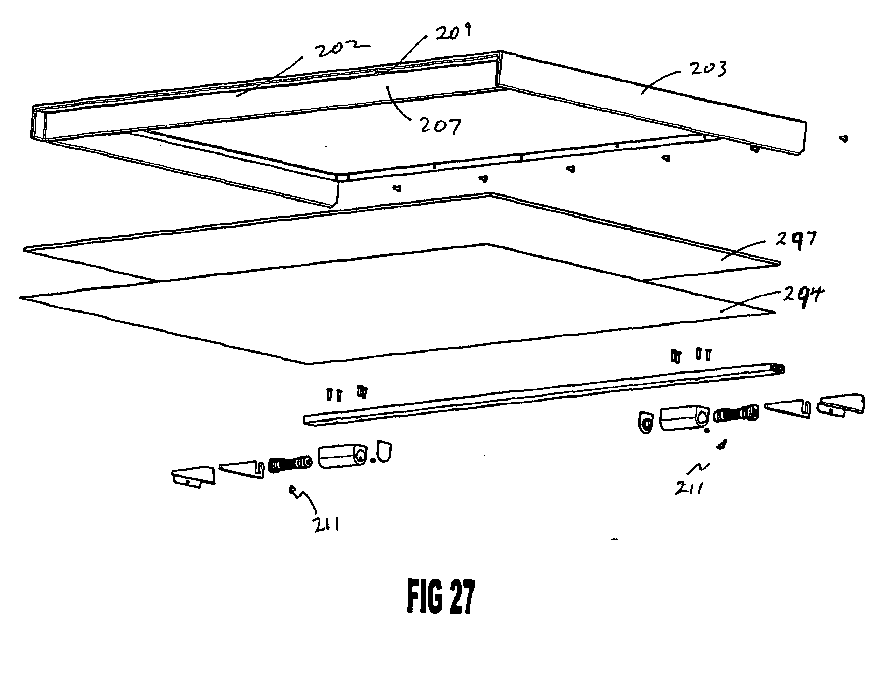

Illustrated in figures 26 and 27 is an alternative lid 200 which is similar to the lid 200 of figures 20 to 25, and like parts have been like numbered. The differences include that the rear edge does not include a rear wall, with the spring or biased hinges 211 being mounted to the underside of the lid top plate 203. This has the effect of leaving the rear edge open.

Another difference is that the lid top plate 203 includes the forward most wall 207 formed integrally. A further difference is that the lid 200 of figures 26 and 27 includes a layer of Masonite or particle board, to decrease the overall weight and improve the insulation of the lid top plate 203.

As the rear edge of lid 200 of figures 26 and 27 is open, a complementary rear wall together with bracket for mounting the lid 200 to a barbecue 100, can be provided for attachment to the barbecue 100.

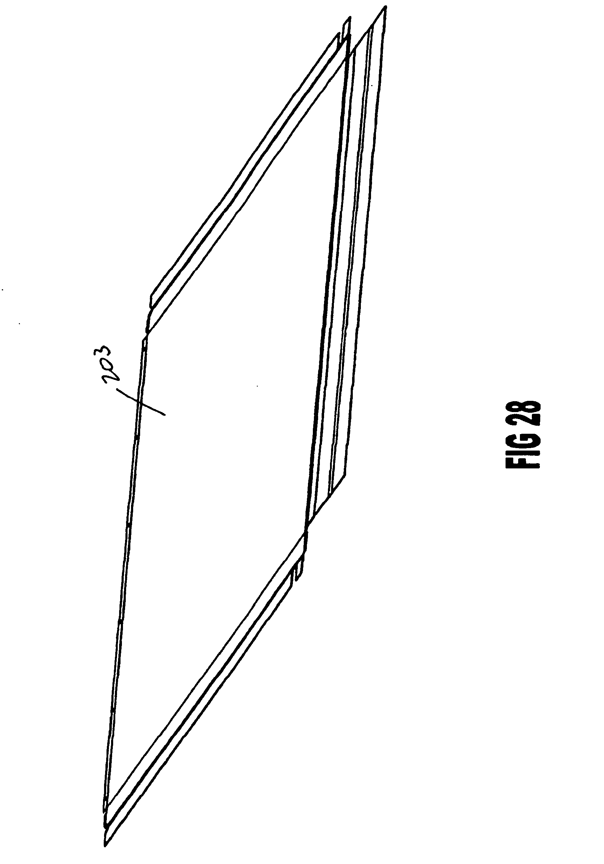

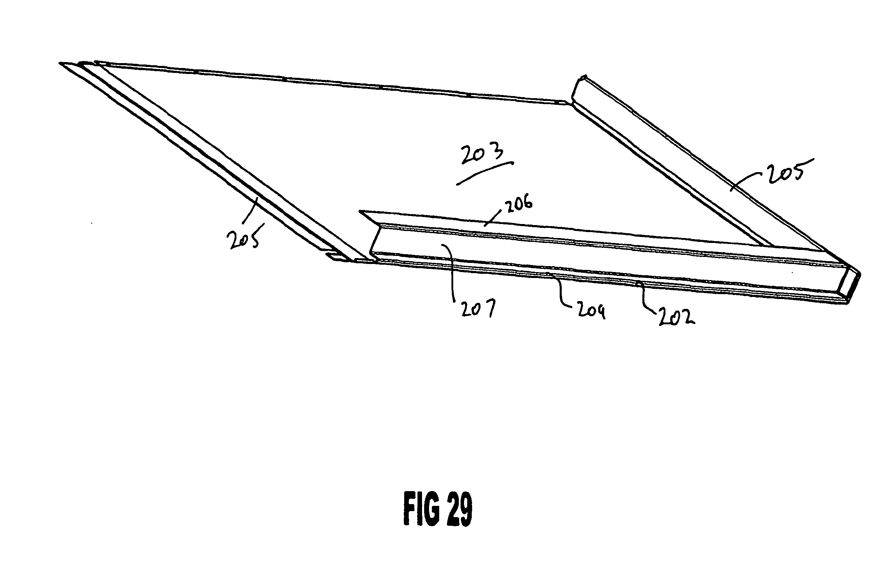

Illustrated in figure 28 is a blank from which the lid top plate 203 can be made and in figure 29 is shown with some sides bent into shape. The lid top plate 203 has as is shown in figure 29 integral sides 205 (of which only one is bent into position) and integral forward wall 206 (prior to being bent into position) and forward most wall 207 (bent into position). This arrangement is believed to reduce manufacturing cost and provide a lighter construction than the system described in figures 20 to 25.

Illustrated in figure 30 is a diagrammatic representation of the U-shaped cut outs required in benches as described above with respect to prior art systems, whereas in figure 31 is a diagrammatic representation of the aperture/hole in the bench top required for use with the barbecue 100 described above.

In the above description the grease collector 11 has its rearward edge 11.3 located below the viewing panels 8.3 and 8.4 so as not to obstruct an operator's vision therethrough. However, if desired, keeping in mind the geometric requirements to remove the grease collector 11 from the cabinet 1, the rearward edge 11.3 could be higher than the viewing panels 8.3 and 8.4, in which case a viewing panel will need to be provided in the rearward wall of the collector so that an operator can see through the rearward wall and then through apertures 8.3 and 8.4. This will have the advantage of being able to provide a grease collector 11 with a greater capacity than that of figure 6.

If desired the two grease collectors 11 can be replaced by a single unit which extends across the whole front edge of the barbecue 100. The difficulty with such a long collector 11 is the problems of disposal and removal as tiny movements which put the trough 11.1 out of level during the removal process may mean liquid splashes and sloshes around making a mess during the removal process. Further if the collector 11 extends across the whole width of the barbecue 100, it would be unlikely that it could then fit into a dishwasher for final cleaning, whereas the arrangement described above is able to be cleaned in a dishwasher.

The arrangement of the grease collectors 11, and their securing mechanism inside the cabinet helps to provide a self locating system. The forward surface of the wall 11.4 or the inside surface of the cabinet wall 1.4 can be provided with means to maintain these walls 11.4 and 1.4 at a distance from each other so the weight of the contents of the collectors 11 can be borne while at the same time allowing air to pass around the collectors 11 and thus help keep them cool.

The above described arrangement of the hotplate 12 and grille assemblies 1325 being on the right and left hand side of the barbecue 100 respectively is preferred, and if desired the respective positions can be swapped, or the hotplate 12 placed between two grille assemblies 1325. However to prevent this the manufacturer can provide means to ensure that only the hotplate 12 can be used on the left had side away from the controls by providing formations or fittings to prevent the hotplate 12 and the grille assemblies 1325 from having their respective positions interchanged.

The grille assemblies 1325 are illustrated with the upper grid 25 being made from convex upwardly oriented channels 25.2. As the grille assembly is preferably made from stainless steel, the use of convex upwardly oriented channels keeps the amount of stainless steel used to a practical minimum. However, depending upon the material or manufacturing process used to make the upper grid 25, the channels 25.2 can be replaced by bar members which are prismatic in construction. It is also preferable that the upwardly directed surface of the bar members includes a longitudinally extending apex, and preferably vertical sides so that fat or liquids can fall from the sides.

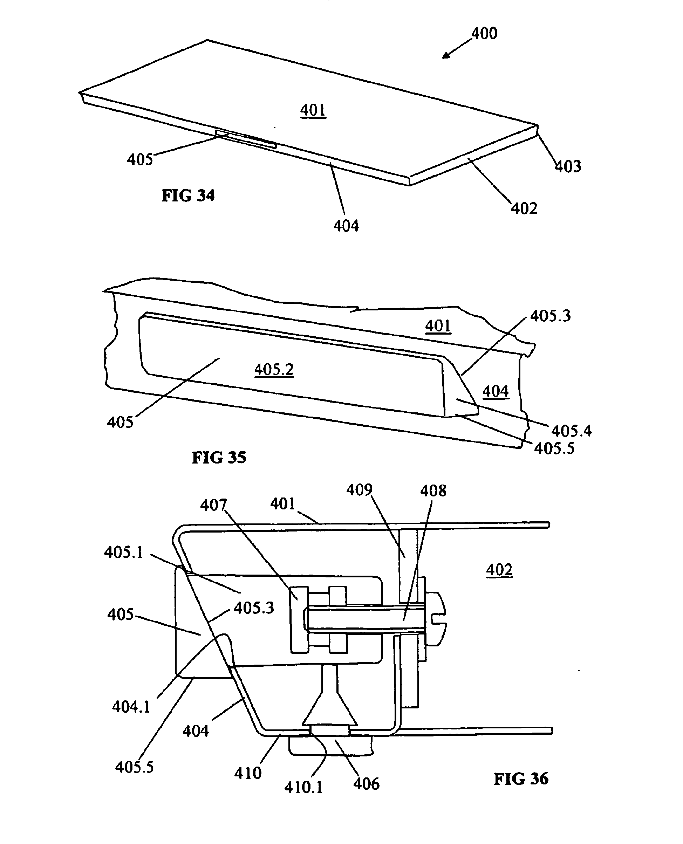

Illustrated in figures 34, 35 and 36 is an alternative lid 400 for use with the barbecue described above. It can have a similar construction to the lids previously described. The lid 400 has an upper planar surface 401, with perpendicular left and right sides 402, and rear side 403. The front side 404 is angled to the vertical approx 15 to 30 degrees, so as to form an undercut or overhang. The lid 404 is in the main constructed from steel or stainless steel, however the handle 405 is manufactured from a heat insulating material such as silicone rubber or any appropriate material, so that a user can have a relatively cool surface with which to raise or lower the lid by rotating the lid around its hinges, should the lid get hot due to sunlight or cooking.

The handle 405, as illustrated in figure 35, has a generally vertical front face 405.2, a sloping rear face 405.3 and generally triangular sides 405.4. The angle that rear face 405.3 makes to front face 405.2 is the approximately same angle to the vertical that front side 404 makes to the vertical. The front face 405.2 provides sufficient surface area for the embossing or printing of a trade mark of the manufacturer of the barbecue or lid. An underneath side 405.5 of the handle 405 provides a surface for a user to engage to rotate the lid 400 around its hinges.

As can be seen from figure 36, the handle 405 preferably has two rearwardly extending cylindrical projections 405.1 having thread inserts 407 which are captured in the handle 405 during moulding. The thread inserts 407 receive screws 408 which pass through a member or wall 409 (similar to wall 206 of earlier figures) so as to secure the handle 405 in place via a washer 408.1, through two holes 404.1 in front side 404. The cylindrical projections have a smaller diameter than the length of rear face 405.3 of handle 405 which thus provides a shoulder to engage the front face of front side 404.

In figure 36 it can also be seen that the lid 400 has an underside member 410 which extends rearwardly from the bottom edge of the front side 404. The underside member 410 extends to the wall 409, and provides an under surface to which feet 406 can be inserted into apertures 410.1 in underside 410. The underside 410 preferably starts at a location which is forward of the front edge of the frame surround 10, so as to help protect the front edge of the frame surround 10 from the elements.

The lid 400 can be manufactured so as to cover only the cooking surface of the barbecue, or if desired wide enough to cover not only the cooking surface but the controls 17 as well, so as to keep the whole of the barbecue's components protected from weather.

Whilst the above barbecue 100 and the majority of its sheet metal components are manufactured preferably from stainless steel, any suitable materials such as mild steel or the like can be selected with the expectation that appropriate protection such as painting or galvanising or enamelling could be used for the protection of the metal from the elements as the barbecue 100 will more than likely be used in an outside environment.

In the above description and claims the word GREASE is used as in grease management system or grease collection system. The word grease in its normal context describes highly viscous liquids. However in the present description and claims, due to heating, grease becomes liquid or less viscous. Further in this context "grease" includes meat juices, blood melted fat, solid particles of meat or gristle which come off meat being cooked, charcoaled pieces of cooked food. While such solids will not generally, under the influence of gravity, move down the slopes provided in the grille assemblies 1325 or on the hotplate 12, they can be pushed along respective surfaces to enter into the grease collectors 11. Thus the grease management systems or grease collectors are also waste solid and liquid management systems or waste solid and liquid collectors, respectively.

Where ever it is used, the word "comprising" is to be understood in its "open" sense, that is, in the sense of "including", and thus not limited to its "closed" sense, that is the sense of "consisting only of". A corresponding meaning is to be attributed to the corresponding words "comprise", "comprised" and "comprises" where they appear.

It will be understood that the invention disclosed and defined herein extends to all alternative combinations of two or more of the individual features mentioned or evident from the text. All of these different combinations constitute various alternative aspects of the invention.

While particular embodiments of this invention have been described, it will be evident to those skilled in the art that the present invention may be embodied in other specific forms without departing from the scope defined by the appended claims. The present embodiments and examples are therefore to be considered in all respects as illustrative and not restrictive, and all modifications which would be obvious to those skilled in the art are therefore intended to be embraced therein.

## Claims

1. A cooking appliance (100) having a cabinet (1) and front (1.4) and rear (1.3) edges and a grease collection system, said cabinet is adapted to hold at least one of a hotplate (12) and or a grille (1325), the grease collection system comprises a removable grease collector (11) arranged at least along a portion of the length of said front edge (1.4) of said cabinet **characterised in that**
the removable grease collector (11) comprises a forward wall (11.4) and is arranged inside the cabinet (1) such that the forward wall (11.4) and the front edge (1.4) are at a distance from each other and extends along at least a part of a forward edge (12.4, 13.1) of at least one of a hotplate (12) and or a grille (1325) provided on said cabinet so as to receive grease or liquid or other substances there from.

2. A cooking appliance as claimed in claim 1, wherein said collector (11) is removable from said cabinet (1) whilst said hot plate or grille remains in said appliance.

3. A cooking appliance as claimed in any one of claims 1 or 2, wherein said collector (11) includes one elongated side (11.4) which is releasably securable to said cabinet.

4. A cooking appliance as claimed in any one of claims 1 to 3, wherein said collector (11) is removable from said cabinet in a step wise motion.

5. A cooking appliance as claimed in claim 4, wherein said step wise motion is comprised of first a vertical motion (102) then horizontal motion (103) then vertical motion (104).

6. A cooking appliance as claimed in any one of claims 1 to 5, wherein said collector includes two spaced handle means to facilitate removal of said collector from said cabinet.

7. A cooking appliance as claimed in claim 6, wherein said handle means is an aperture (11.8) through a side wall of said collector.

8. A cooking appliance as claimed in claim 7, wherein said aperture (11.8) includes a grommet or bead around its periphery.

9. A cooking appliance as claimed in any one of claims 6 to 8, wherein said handle means enable said collector (11) to have its angular of orientation controlled as said collector is removed from said cabinet (1).

10. A cooking appliance as claimed in any one of claims 1 to 9, wherein said cabinet includes a heat shield (8) between a heat source (2) for said appliance and said collector (11).

11. A cooking appliance as claimed in any one of claims 1 to 10, wherein said hot plate (12) or grille (1325) extends over and past said heat shield (8) to determinate above said collector (11).

12. A cooking appliance as claimed in claim 11, wherein said heat shield (8) includes a double wall arrangement having an air gap (8.5) between.

13. A cooking appliance as claimed in claim 11 or 12, wherein said heat shield includes at least said one viewing aperture (8.3, 8.4) to enable an operator to view through or past said collector and said apertures to determine if a heat source (2) is activated.

14. A cooking appliance as claimed in claim 13, wherein said at least one aperture includes a mica viewing panel.

## Patentansprüche

1. Kochgerät (100), aufweisend einen Schrank (1) und Vorderkante (1.4) und Hinterkante (1.3) und ein Fettsammelsystem, wobei der Schrank ausgeführt ist, um mindestens eines von einer Kochplatte (12) und oder einem Grill (1325) aufzuweisen, das Fettsammelsystem einen abnehmbaren Fettsammler (11) aufweist, der mindestens entlang einem Teil der Länge der Vorderkante (1.4) des Schranks angeordnet ist, **dadurch gekennzeichnet, dass** der Fettsammler (11) eine vorwärts gerichtete Wand (11.4) aufweist und im Inneren des Schranks (1) auf solche Weise angeordnet ist, dass sich die vorwärts gerichtete Wand (11.4) und die Vorderkante (1.4) auf einem Abstand voneinander befinden und sich mindestens entlang einem Teil einer vorwärts gerichteten Kante (12.4, 13.1) von mindestens einem von einer Kochplatte (12) oder einem Grill (1325) erstrecken, die beziehungsweise der am Schrank bereitgestellt ist, um Fett oder Flüssigkeit oder andere Substanzen von dort zu empfangen.

2. Kochgerät nach Anspruch 1, wobei der Sammler (11) vom Schrank (1) entfernt werden kann während die Kochplatte oder der Grill im Kochgerät verbleiben.

3. Kochgerät nach einem der Ansprüche 1 oder 2, wobei der Sammler (11) eine verlängerte Seite (11.4) aufweist, die lösbar am Schrank gesichert ist.

4. Kochgerät nach einem der Ansprüche 1 bis 3, wobei der Sammler (11) in einer stufenartigen Bewegung vom Schrank entfernt werden kann.

5. Kochgerät nach Anspruch 4, wobei die stufenartige Bewegung erst eine senkrechte Bewegung (102), dann eine waagrechte Bewegung (103), dann eine senkrechte Bewegung (104) umfasst.

6. Kochgerät nach einem der Ansprüche 1 bis 5, wobei der Sammler zwei auseinander liegende Griffmittel zum Vereinfachen des Entfernens des Sammlers vom Schrank aufweist.

7. Kochgerät nach Anspruch 6, wobei das Griffmittel eine Öffnung (11.8) durch eine Seitenwand des Sammlers ist.

8. Kochgerät nach Anspruch 7, wobei die Öffnung (11.8) eine Bördelung oder Wulst um den Umkreis herum aufweist.

9. Kochgerät nach einem der Ansprüche 6 bis 8, wobei das Griffmittel eine winkelbezogene Steuerung des Sammlers (11) beim Entfernen vom Schrank (1) gestattet.

10. Kochgerät nach einem der Ansprüche 1 bis 9, wobei der Schrank einen Wärmeschild (8) zwischen einer Wärmequelle (2) für das Kochgerät und dem Sammler (11) aufweist.

11. Kochgerät nach einem der Ansprüche 1 bis 10, wobei die Kochplatte (12) oder der Grill (1325) sich über und hinter den Wärmeschild (8) hinaus erstreckt, um den Sammler (11) zu begrenzen.

12. Kochgerät nach Anspruch 11, wobei der Wärmeschild (8) eine Doppelwandanordnung mit einem dazwischen liegenden Luftspalt (8.5) aufweist.

13. Kochgerät nach Anspruch 11 oder 12, wobei der Wärmeschild mindestens eine Sichtöffnung (8.3, 8.4) aufweist, die einem Bediener gestattet, durch oder hinter den Sammler und die Öffnungen zu sehen, um festzustellen, ob eine Wärmequelle (2) aktiviert ist.

14. Kochgerät nach Anspruch 13, wobei mindestens eine Öffnung eine Glimmer-Sichttafel aufweist.

## Revendications

1. Un appareil de cuisson (100) doté d'une enveloppe (1), de rebords avant (1.4) et arrière (1.3) et d'un système de récupération de la graisse ; laquelle enveloppe est adaptée pour supporter au moins une plaque de cuisson (12) et/ou une grille (1325) ; le système de récupération de la graisse comprend un collecteur de graisse amovible (11) placé le long d'au moins une partie du rebord avant (1.4) de ladite enveloppe **caractérisé en ce que**
le collecteur de graisse amovible (11) comprend une paroi avant (11.4) et est installé à l'intérieur de l'enveloppe (1) de façon à ce que la paroi avant (11.4) et le rebord avant (1.4) soient espacés l'un de l'autre et touchent au moins une partie du rebord avant (12.4, 13.1) d'au moins une plaque de cuisson (12) et/ou une grille (1325), de ladite enveloppe afin de recueillir la graisse, les liquides ou toute autre substance.

2. Un appareil de cuisson selon la revendication 1, dans lequel ledit collecteur (11) est amovible de ladite enveloppe (1), tandis que la plaque de cuisson ou la grille reste en place sur ledit appareil.

3. Un appareil de cuisson selon l'une des revendications 1 ou 2, dans lequel ledit collecteur (11) est doté d'un côté allongé (11.4) pouvant être facilement fixé de façon démontable à l'appareil.

4. Un appareil de cuisson selon l'une des revendications 1 à 3, dans lequel ledit collecteur (11) est amovible dudit cabinet par un mouvement progressif.

5. Un appareil de cuisson selon la revendication 4, dans lequel le mouvement progressif est composé d'un premier mouvement vertical (102), puis d'un mouvement horizontal (103), puis d'un mouvement vertical (104).

6. Un appareil de cuisson selon l'une des revendications 1 à 5, dans lequel ledit collecteur comprend deux poignées séparées conçues pour faciliter le retrait dudit collecteur de l'enveloppe.

7. Un appareil de cuisson selon la revendication 6, dans lequel la poignée est une ouverture (11.8) dans la paroi latérale dudit collecteur.

8. Un appareil de cuisson selon la revendication 7, dans lequel l'ouverture (11.8) est entourée d'un oeillet ou d'un collier.

9. Un appareil de cuisson selon l'une des revendications 6 à 8, dans lequel ladite poignée permet de contrôler l'angle d'orientation du collecteur (11) lors du retrait dudit collecteur de l'enveloppe.

10. Un appareil de cuisson selon l'une des revendications 1 à 9, dans lequel ladite enveloppe comprend un bouclier thermique (8) placé entre une source de chaleur (2) pour ledit appareil et ledit collecteur.

11. Un appareil de cuisson selon l'une des revendications 1 à 10, dans lequel ladite plaque de cuisson (12) ou grille (1325) dépasse le bouclier thermique (8) pour se trouver au-dessus dudit collecteur (11).

12. Un appareil de cuisson selon la revendication 11, dans lequel le bouclier thermique (8) comprend une double paroi dotée d'un entrefer (8.5).

13. Un appareil de cuisson selon l'une des revendications 11 ou 12, dans lequel ledit bouclier thermique comprend au moins une ouverture (8.3, 8.4) permettant à l'utilisateur de regarder au travers et par-delà dudit collecteur et des ouvertures pour déterminer si la source de chaleur (2) est activée.

14. Un appareil de cuisson selon la revendication 13, dans laquelle au moins l'une desdites ouvertures est dotée d'une paroi en mica.
